(19) **Europäisches Patentamt / European Patent Office / Office européen des brevets**

(11) **EP 2 131 215 A1**

(12) **EUROPEAN PATENT APPLICATION**
published in accordance with Art. 153(4) EPC

(43) Date of publication:
**09.12.2009 Bulletin 2009/50**

(51) Int Cl.:
*G02B 5/08* (2006.01)    *C08L 23/00* (2006.01)
*C08L 67/00* (2006.01)    *C08L 79/00* (2006.01)

(21) Application number: **08722293.1**

(22) Date of filing: **17.03.2008**

(86) International application number:
**PCT/JP2008/054899**

(87) International publication number:
**WO 2008/123045 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007081863**

(71) Applicant: **Nisshinbo Holdings, Inc.**
**Chuo-ku**
**Tokyo 103-8650 (JP)**

(72) Inventors:
• **TAKAHASHI, Ikuo**
**Chiba-shi**
**Chiba 267-0056 (JP)**
• **IIDA, Hirotaka**
**Chiba-shi**
**Chiba 267-0056 (JP)**

(74) Representative: **Steffan, Gerhard**
**Leifert & Steffan**
**Patentanwälte**
**Postfach 10 40 09**
**40031 Düsseldorf (DE)**

(54) **REFLECTIVE FILM, AND REFLECTIVE SHEET FOR BACK LIGHT COMPRISING THE SAME**

(57) The present invention provides a polyolefin/polyester-based reflective film having a high reflectivity and a reflective sheet for backlight comprising the reflective film, wherein the reflective film is produced by forming a resin composition that contains 100 parts by mass of a polyolefin component (A) comprising a polyolefin with stereospecificity and a modified polypropylene and from 40 to 240 parts by mass of a biodegradable polyester component (B), into a film followed by stretching it, and wherein the reflective film requires neither addition of a filler to the starting resin composition nor provision of a reflective coating layer on the surface of the resulting film for the purpose of imparting optical properties such as reflectivity to the film.

**Description**

Technical Field

The present invention relates to a reflective film comprising a polyolefin component and a polyester component, in particular to such a reflective film usable in liquid-crystal display devices, lighting appliances, signboards for illumination, etc., and to a reflective sheet for backlight comprising it.

Background Art

As a light reflector to form a backlight unit in liquid-crystal display devices such as word processors, personal computers, television sets, etc., known is a light reflector that comprises a porous resin sheet produced by at least monoaxially stretching a sheet which contains a specific amount of a stretching assistant and 100 parts by weight of a resin composition containing from 25 to 40 % by weight of a polypropylene resin and from 75 to 60 % by weight of an inorganic filler such as titanium oxide or the like (e.g., see Patent Document 1). Also known is an aliphatic polyester-based resin reflective film for use in liquid-crystal display devices, lighting appliances, signboards for illumination, etc., which comprises, as the resin, an aliphatic polyester and contains a powdery filler such as titanium oxide or the like, and which has pores inside it to have a porosity of at most 50 % (e.g., see Patent Document 2).

As a stretched film comprising a polyolefin/polyester-based resin composition, known is a polylactic acid film which is produced by forming the resin composition into a film followed by stretching it, and which contains fine pores inside the film and has an increased degree of whiteness (e.g., see Patent Document 3).

However, the reflective films described in Patent Document 1 and Patent Document 2 require the powdery filler such as titanium oxide or the like in an amount enough to fully reveal the desired reflectivity. The reflective film described in Patent Document 3 contains a large number of pores inside the film, and therefore the film could not reveal the strength performance that the resin material has, and the strength of the film tends to lower.

[Patent Document 1] JP-A 11-174213
[Patent Document 2] Domestic Re-Publication of PCT Patent Application 2004/104077
[Patent Document 3] JP-A 2002-146071

Disclosure of the Invention

Problems to be Solved by the Invention

An object of the present invention is to provide a polyolefin/polyester-based reflective film having a high reflectivity and a reflective sheet for backlight comprising the reflective film, wherein the reflective film is formed from a resin composition containing a polyolefin component and a polyester component and wherein the reflective film requires neither addition of a filler to the starting resin composition nor provision of a reflective coating layer on the surface of the resulting film for the purpose of imparting optical properties such as reflectivity to the film.

Means for Solving the Problems

The present inventors have assiduously studied for the purpose of developing a polyolefin/polyester-based high-reflectivity film having the above-mentioned preferred properties. As a result, the inventors have found that a film produced by forming a resin composition, which contains a polyolefin component (A) comprising a polyolefin, preferably a polyolefin having a specific molecular weight distribution, and a modified polypropylene, and a specific amount of a biodegradable polyester component (B), into a film followed by stretching it can attain the object, and have completed the present invention on the basis of this finding.

Specifically, the present invention includes the following:

(1) A reflective film produced by forming a resin composition that contains 100 parts by mass of a polyolefin component (A) comprising a polyolefin and a modified polypropylene and from 40 to 240 parts by mass of a biodegradable polyester component (B), into a film followed by stretching it;
(2) The reflective film of the above (1), wherein the polyolefin is a propylene homopolymer or a copolymer of propylene with ethylene or an olefin having from 4 to 20 carbon atoms;
(3) The reflective film of the above (1), wherein the polyolefin has a molecular weight distribution, as represented by weight-average molecular weight (Mw)/number-average molecular weight (Mn), of from 1.5 to 5.5;

(4) The reflective film of any one of the above (1) to (3), wherein the modified polypropylene is a modified polypropylene containing at least one selected from an acrylic acid-modified polypropylene, a methacrylic acid-modified polypropylene and a maleic acid-modified polypropylene;

(5) The reflective film of the above (1), wherein the biodegradable polyester component (B) is a polylactic acid containing any one optical isomer of D-form or L-form thereof in an amount of at least 95 % by mass;

(6) The reflective film of any one of the above (1) to (3), wherein the resin composition further contains a polycarbodiimide compound in an amount of from 0.1 to 5 parts by mass relative to 100 parts by mass of the total of the polyolefin component (A) and the biodegradable polyester component (B);

(7) A reflective sheet for backlight, comprising a reflective film of any one of the above (1) to (6).

Effect of the Invention

According to the present invention, there are provided a polyolefin/polyester-based reflective film having a high reflectivity and a reflective sheet for backlight comprising the reflective film, wherein the reflective film is formed from a resin composition containing a polyolefin component and a polyester component and wherein the reflective film requires neither addition of a filler to the starting resin composition nor provision of a reflective coating layer on the surface of the film for the purpose of imparting optical properties such as reflectivity to the film. Best Mode for Carrying out the Invention

The present invention is described in more detail hereinunder.

The reflective film of the present invention comprises a polyolefin component (A) comprising a polyolefin and a modified polypropylene and a biodegradable polyester component (B), and is produced by forming the resin composition of these constitutive resin components miscible with each other, into a film followed by stretching it.

The polyolefin is an olefin homopolymer of an olefin having from 2 to 20 carbon atoms, or a copolymer of at least two those olefins, and the homopolymer or the copolymer can be produced through olefin homopolymerization or copolymerization in an ordinary manner using, for example, a metallocene catalyst, a Ziegler-Natta catalyst or the like. The polyolefin in the present invention may contain any one or more of the homopolymer and the copolymer either singly or as combined. The polyolefin may be either an isotactic polyolefin or a syndiotactic polyolefin.

The polyolefin preferably has a molecular weight distribution, as represented by weight-average molecular weight (Mw) /number-average molecular weight (Mn), of from 1.5 to 5.5, more preferably from 1.8 to 3.7.

When the molecular weight distribution of the polyolefin falls within a range of from 1.5 to 5.5, then the film produced by forming the resin composition that contains a polyolefin component (A) comprising the polyolefin of the type and a biodegradable polyester component (B), into a film followed by stretching it can have excellent strength and physical properties and can have excellent light reflectivity.

Mw and Mn can be determined according to a method of gel permeation chromatography (GPC) using monodispersed polystyrene as a standard substance. The apparatus and the condition for the measurement are as follows:

> Apparatus: ALC/GPC 150C (Waters' high-temperature GPC).
> Detector: MIRAN-1A (FOXBORO's IR detector).
> Column: AD806M/S (by Showa Denko, 3 columns).
> Mobile phase solvent: o-chlorobenzene.
> Flow rate: 1.0 ml/min.
> Test temperature: 140°C.
> Standard monodispersed polystyrene: F380, F288, F128, F80, F40, F20, F10, F4, F1, A5000, A2500, A1000 (all manufactured by TOSOH CORPORATION).
> Calibration curve: according to least squares method. Molecular weight-conversion viscosity formula and converted data: $[\eta] = K \cdot M^{\alpha}$, polystyrene ($K = 1.38 \times 10^{-4}$, $\alpha = 0.7$), polypropylene ($K = 1.03 \times 10^{-4}$, $\alpha = 0.78$).

The olefin having from 2 to 20 carbon atoms includes, for example, a linear or branched $\alpha$-olefin, a cyclic olefin, an aromatic vinyl compound, a conjugated diene, a non-conjugated diene, etc. The linear or branched $\alpha$-olefin concretely includes those having from 2 to 20 carbon atoms, preferably from 2 to 10 carbon atoms, for example, ethylene, propylene, 1-butene, 1-pentene, 3-methyl-1-butene, 1-hexene, 4-methyl-1-pentene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene, 1-eicosene, etc.

The cyclic olefin includes a cyclic olefin having from 3 to 20 carbon atoms, preferably from 5 to 15 carbon atoms, such as cyclopentene, cycloheptene, norbornene, 5-methyl-2-norbornene, tetracyclododecene, vinylcyclohexane, etc.

The aromatic vinyl compound includes a mono- or poly-alkylstyrene, for example, styrene, $\alpha$-methylstyrene, o-methylstyrene, m-methylstyrene, p-methylstyrene, o,p-dimethylstyrene, o-ethylstyrene, m-ethylstyrene, p-ethylstyrene, etc.

The conjugated diene includes those having from 4 to 20 carbon atoms, preferably from 4 to 10 carbon atoms, for example, 1,3-butadiene, isoprene, chloroprene, 1,3-pentadiene, 2,3-dimethylbutadiene, 4-methyl-1,3-pentadiene, 1,3-pentadiene, 1,3-hexadiene, 1,3-octadiene, etc.

The non-conjugated diene includes those having from 5 to 20 carbon atoms, preferably from 5 to 10 carbon atoms, for example, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, 2-propenyl-2,2-norbornadiene, etc.

The olefin homopolymer or copolymer selected from the above-mentioned, those olefins concretely includes, for example, polyethylene, polypropylene, polybutylene, polybutadiene, polybutene, polymethylpentene, ethylene-propylene copolymer, styrene-ethylene/butylene block copolymer, styrene-ethylene/butylene-styrene block copolymer, ethylene-ethylene/butylene-ethylene block copolymer, styrene-ethylene/butadiene-styrene copolymer, hydrogenated styrene-isoprene-styrene copolymer, ethylene-propylene-diene random copolymer, etc. Of those, preferred are a propylene homopolymer and an olefin copolymer of propylene with ethylene or an olefin having from 4 to 20 carbon atoms; and more preferred is an ethylene-propylene copolymer.

In the present invention, the polyolefin preferably has a melt flow rate falling within a range of from 3 to 15 g/10 min, more preferably within a range of from 3 to 10 g/10 min, even more preferably within a range of from 6 to 8 g/10 min. The melt flow rate as referred to herein is a value measured according to JIS K-7210 (test method for melt mas flow rate and melt volume flow rate of plastics - thermoplastic plastics) under the condition of a test temperature of 230°C and a load of 21.18 N.

When the melt flow rate of the polyolefin is at least 3 g/10 min, then the film produced by forming the resin composition that contains a polyolefin component (A) and a biodegradable polyester component (B), into a film followed by stretching it can have excellent light reflectivity. When the melt flow rate is at most 15 g/10 min, then the degree of orientation of the polymer molecules constituting the film can be increased in stretching the film and the film can have excellent strength and physical properties.

The modified polypropylene in the present invention is produced by introducing an unsaturated compound having at least one carboxylic acid group, an unsaturated compound having at least one carboxylic anhydride group or a derivative thereof, into a so-called polypropylene-based resin of a propylene homopolymer, a copolymer of propylene with an α-olefin or a mixture thereof, through graft copolymerization or radical copolymerization.

The degree of modification that indicates the ratio of the unsaturated compound introduced into the polymer is preferably from 1 to 30 % by mass or so, more preferably from 3 to 15 % by mass.

When the degree of modification is less than 1 %, then the miscibility of the obtained resin composition may be insufficient and the tensile elongation of the reflective film may lower.

The copolymer of propylene with an α-olefin, as one type of the starting resin for the modified polypropylene, is a propylene-based copolymer in which the content of the propylene-derived constitutive unit is larger than the content of the α-olefin-derived constitutive unit; and the α-olefin for use in preparing the copolymer is an α-olefin that has from 2 to 20 carbon atoms except propylene, including ethylene, 1-butene, 1-pentene, 1-hexene, 1-heptene, 1-octene, 4-methyl-1-pentene, 4-methyl-1-hexene, 4,4-dimethyl-1-pentene, etc. The copolymer of propylene with an α-olefin may be a block copolymer or a random copolymer, and may be a copolymer produced through copolymerization of propylene with plural α-olefins. As the α-olefin for the copolymer, most preferred is ethylene.

The unsaturated compound is a compound having an unsaturated group such as a vinyl group, a vinylene group, an unsaturated cyclic hydrocarbon group or the like, and includes unsaturated carboxylic acids, as well as their acid anhydrides and their derivatives (e.g., acid halides, amides, imides, esters).

Examples of unsaturated carboxylic acids include acrylic acid, methacrylic acid, maleic acid, fumaric acid, tetrahydrophthalic acid, itaconic acid, citraconic acid, crotonic acid, isocrotonic acid, norbornene-dicarboxylic acid, bicyclo[2,2,1]hept-2-ene-5,6-dicarboxylic acid, etc.

Examples of their acid anhydrides and their derivatives include malenyl chloride, malenyl imide, maleic anhydride, itaconic anhydride, citraconic anhydride, tetrahydrophthalic anhydride, bicyclo[2,2,1]hept-2-ene-5,6-dicarboxylic acid anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth) acrylate, aminoethyl methacrylate, aminopropyl methacrylate, etc.

The modified propylene produced through graft copolymerization or radical copolymerization of a polypropylene-based resin may contain one or more of these modified polypropylenes.

Of those modified polypropylenes, preferred are acrylic acid-modified polypropylene, methacrylic acid-modified polypropylene and maleic acid-modified polypropylene produced through introduction of acrylic acid, methacrylic acid or maleic acid as the unsaturated carboxylic acid. Above all, more preferred is acrylic acid-modified polypropylene.

The polyolefin component (A) in the present invention may be prepared by mixing the above-mentioned polyolefin having a molecular weight distribution, as represented by weight-average molecular weight (Mw)/number-average molecular weight (Mn), of from 1.5 to 5.5, and the above-mentioned, modified polypropylene in a desired ratio. In particular, for uniformly stretching the film for pore formation therein, preferably, the modified polypropylene is added to the polyolefin in an amount of from 1 to 100 parts by mass relative to 100 parts by mass of the polyolefin, more preferably in an amount of from 5 to 70 parts by mass, even more preferably in an amount of from 10 to 50 parts by mass. When the blend ratio of the modified polypropylene is within a range of from 1 to 100 parts by mass relative to 100 parts by mass of polyolefin, then the ingredients of the resin composition are suitably miscible with each other, and the obtained film can reveal excellent glossiness (reflectivity) when stretched.

The biodegradable polyester component (B) in the present invention includes those generally referred to as biodegradable plastics, for example, aliphatic polyesters such as polylactic acid-based aliphatic polyesters, polycaprolactone-based aliphatic polyesters, aliphatic polyesters produced by microorganisms, polyhydroxyalkanoates, polybutylene succinates, etc.; as well as aromatic polyesters such as polyethylene terephthalate, polyethylene naphthalate, polybutylene terephthalate, etc.; and their mixtures.
Polyhydroxyalkanoates as referred to herein are also called polyhydroxyalkanoic acids, and these are polymers or copolymers of a hydroxy group-having alkanoic acid as the constitutive monomer, in which the monomer units are ester-bonded to each other. Typical examples of the constitutive monomer are 3-hydroxybutyric acid (3HB), 3-hydroxyvaleric acid (3HV), 4-hydroxyvaleric acid (4HB), etc.

Polylactic acid-based aliphatic polyesters include polylactides, concretely polymers of a hydroxy acid such as lactic acid, malic acid, glycolic acid or the like, and their copolymers, for example, polylactic acid, poly($\alpha$-malic acid), polyglycolic acid, glycolic acid-lactic acid copolymer, etc. Especially mentioned are hydroxycarboxylic acid-based aliphatic polyesters such as typically polylactic acid.

Polycaprolactone-based aliphatic polyesters are aliphatic polyesters having a repetitional unit represented by a general formula: $-(O(CH_2)_5CO)-$, which are produced through ring-opening polymerization of $\varepsilon$-caprolactone, and which are, though water-insoluble polymers, degradable by many microorganisms. Commercial products of such polycaprolactone-based aliphatic polyesters include, for example, Nippon Unicar's "TONE" (trade name), DAICEL CHEMICAL INDUSTRIES' "CELLGREEN" (trade name) PH series, CBS series, etc.

Aliphatic polyesters produced by microorganisms are bio-derived thermoplastic polymer having a melting point. Concretely, they include polyhydroxybutyrate (PHB), poly(hydroxybutyric acid-hydroxypropionic acid) copolymer, poly(hydroxybutyric acid-hydroxyvaleric acid) copolymer, etc.

One or more these polyesters may be used herein either singly or as combined.

Of those biodegradable polyesters component (B) in the reflective film of the present invention, preferred is polylactic acid, and more preferred is highly-crystalline polylactic acid in which any one optical isomer of D- form or L-form of polylactic acid accounts for at least 95 % by mass. Using such a highly-crystalline polylactic acid can enhance the light reflectivity of the obtained reflective film.

The resin composition in the present invention comprises the polyolefin component (A) and the biodegradable polyester component (B), to which a carbodiimide compound may be further added. Adding a carbodiimide compound to the composition controls the miscibility between the polyolefin component (A) and the biodegradable polyester component (B) and imparts hydrolysis resistance and wet heat stability to the film of the composition. The carbodiimide compound is a compound having at least one carbodiimide group in the molecule, for example, including N,N'-phenylcarbodiimide, N,N'-di-2,6-diisopropylphenylcarbodiimide, etc.
The carbodiimide compounds can be produced, for example, by processing various polyisocyanates for decarboxylation condensation in the absence of a solvent or in an inert solvent at a temperature of not lower than about 70°C, using an organic phosphorus compound or an organic metal compound as a catalyst.

As the polycarbodiimide compound having at least two carbodiimide groups, concretely, usable are those produced according to conventional methods for producing polycarbodiimide compounds [e.g., USP 2941956; JP-B 47-33279; J. Org. Chem., 28, 2069-2075 (1963); Chemical Review, 1981, Vol. 81, No. 4, pp. 619-621].

As the organic diisocyanate that is a starting material in production of the polycarbodiimide compound for use in the present invention, usable are aromatic diisocyanates, aliphatic diisocyanates, alicyclic diisocyanates and their mixtures. The aromatic diisocyanates include, for example, 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 2,4-tolylene diisocyanate/2,6-tolylene diisocyanate mixture, xylylene diisocyanate, tetramethylxylylene diisocyanate, 2,6-isopropylphenyl diisocyanate, 1,3,5-triisopropylbenzene 2,4-diisocyanate, etc.
The aliphatic diisocyanates include, for example, hexamethylene diisocyanate, etc. The alicyclic diisocyanates include, for example, cyclohexane 1,4-diisocyanate, isophorone diisocyanate, dicyclohexylmethane 4,4'-diisocyanate, methylcyclohexane diisocyanate, etc.

Of the polycarbodiimide compounds starting from the above-mentioned diisocyanates as the polycarbodiimide compounds, preferably used in the present invention are aliphatic polycarbodiimide compounds starting from aliphatic diisocyanates, alicyclic diisocyanates or their mixtures, as capable of producing reflective films excellent not only in hydrolysis resistance and wet heat stability but also in light-resistance.

The polymerization to give the above-mentioned polycarbodiimide compounds can be stopped by cooling on the way to thereby make the produced compound have a controlled degree of polymerization. In this case, the terminal is isocyanate.

Alternatively for making the produced compound have a controlled degree of polymerization, also employable is a method of using a compound capable of reacting with the terminal isocyanate of the polycarbodiimide compound, such as monoisocyanate or the like, to thereby block all or a part of the remaining terminal isocyanate. Controlling the degree of polymerization may enhance the miscibility of the polycarbodiimide compound in polymer and the storage stability thereof, which is therefore favorable for quality improvement. The monoisocyanate to block the terminal of the polycarbodiimide compound to thereby control the degree of polymerization of the compound includes, for example, phenyl isocyanate, tolyl isocyanate, dimethylphenyl isocyanate, cyclohexyl isocyanate, butyl isocyanate, etc.

The terminal-blocking agent for blocking the terminal of the polycarbodiimide compound to control the degree of polymerization of the compound is not limited to the above-mentioned monoisocyanate, but may be any other active hydrogen compound capable of reacting with isocyanate, including, for example, aliphatic, aromatic or alicyclic compounds, (i) having an -OH group, such as methanol, ethanol, phenol, cyclohexanol, N-methylethanolamine, polyethylene glycol monomethyl ether, polypropylene glycol monomethyl ether; (ii) having an =NH group, such as diethylamine, dicyclohexylamine; (iii) having an -NH$_2$ group, such as butylamine, cyclohexylamine; (iv) having a -COOH group, such as succinic acid, benzoic acid, cyclohexanoic acid; (v) having an -SH group, such as ethylmercaptan, allylmercaptan, thiophenol; (vi) a compound having an epoxy group; (vii) acetic anhydride, methyltetrahydrophthalic anhydride, methylhexahydrophthalic anhydride, etc. As hardly-yellowing structures, preferred are those having an -OH group.

The decarboxylation condensation of the above-mentioned diisocyanate is attained in the presence of a suitable carbodiimidation catalyst. The usable carbodiimidation catalyst includes organic phosphorus compounds, organic metal compounds (represented by a general formula, M-(OR)$_4$ [M means titanium (Ti), sodium (Na), potassium (K), vanadium (V), tungsten (W), hafnium (Hf), zirconium (Zr), lead (Pb), manganese (Mn), nickel (Ni), calcium (Ca), barium (Ba), etc.; R means an alkyl group or an aryl group having from 1 to 20 carbon atoms], organic metal carboxylates, etc. Above all, from the viewpoint of the activity thereof, phosphorene oxides are preferred as the organic phosphorus compounds; titanium, hafnium or zirconium alkoxides are preferred as the organic metal compounds; and tin organic carboxylates such as tin octylate are preferred as the organic metal carboxylates.

The phosphorene oxides concretely include 3-methyl-1-phenyl-2-phosphorene-1-oxide, 3-methyl-1-ethyl-2-phosphorene-1-oxide, 1,3-dimethyl-2-phosphorene-1-oxide, 1-phenyl-2-phosphorene-1-oxide, 1-ethyl-2-phosphorene-1-oxide, 1-methyl-2-phosphorene-1-oxide, and their double bond isomers. Above all, especially preferred is 3-methyl-1-phenyl-2-phosphorene-1-oxide as readily available for industrial use.

In the present invention, in addition to the above-mentioned carbodiimide compound, any other compatibilizing agent than the carbodiimide compound may be added to the composition. Not limited to block copolymers, random copolymers and graft copolymers, the compatibilizing agent includes any and every polymer having, in the molecule, a moiety essentially soluble in polyolefin or having affinity with it, and a moiety essentially soluble in polyester or having affinity with it. Concretely, for example, it includes styrene-ethylene-butadiene copolymer, styrene-ethylene-butadiene-styrene copolymer, hydrogenated styrene-propylene-styrene copolymer, ethylene-propylene-diene random copolymer, etc.

The other polymer capable of serving as a compatibilizing agent may be a reactive compatibilizing agent having a double bond, a carboxyl group, an epoxy group or the like. Concretely, it includes ethylene-glycidyl methacrylate copolymer, ethylene-glycidyl methacrylate-vinyl alcohol copolymer, ethylene-glycidyl methacrylate copolymer, ethylene-maleic anhydride-ethyl acrylate copolymer, maleic anhydride-grafted polypropylene, maleic acid-grafted polyethylene, ethylene-glycidyl methacrylate-acrylonitrile-styrene, ethylene-glycidyl methacrylate-polystyrene, ethylene-glycidyl methacrylate-polymethyl methacrylate, acid-modified polyethylene wax, COOH-ated polyethylene graft polymer, COOH-ated polypropylene graft polymer, etc.

The blend ratio of the components to constitute the resin composition for producing the reflective film of the present invention is described. First, the blend ratio of the polyolefin component (A) and the biodegradable polyester component (B) is described. The biodegradable polyester component (B) is from 40 to 240 parts by mass relative to 100 parts by mass of the polyolefin component (A), preferably from 80 to 150 parts by mass, more preferably from 90 to 110 parts by mass. When the biodegradable polyester component (B) is at least 40 parts by mass relative to 100 parts by mass of the polyolefin component (A), then the property of the film to reflect light is enhanced. When the biodegradable polyester component (B) is at most 240 parts by mass, then the mechanical properties of the film are better.

Preferably, the carbodiimide compound is from 0.1 to 5 parts by mass relative to 100 parts by mass of the resin component of the polyolefin component (A) and the biodegradable polyester component (B) as combined.

To the resin composition comprising the polyolefin component (A) and the biodegradable polyester component (B) in the present invention, optionally added, if desired, is an auxiliary filler for reflecting light. The filler includes an organic filler, inorganic filler, etc. As the organic filler, usable is at least one selected from cellulose powders such as wood powder, pulp powder, etc.; and polymer beads, hollow polymer beads, etc.

As the inorganic filler, usable is at least one selected from barium sulfate, barium carbonate, calcium carbonate, magnesium carbonate, calcium sulfate, magnesium sulfate, calcium oxide, magnesium oxide, alumina, titanium oxide, zinc oxide, aluminium hydroxide, hydroxyapatite, silica, mica, talc, kaolin, clay, glass powder, asbestos powder, zeolite, soft silica, etc. Of those fillers, when titanium oxide is used, then the light reflectivity of the obtained film can be higher, since the refractive index of titanium oxide is high and the refractivity difference between the resin and the titanium oxide in the resin composition may be large. When barium sulfate is used as the filler, then the light reflectivity of the reflective film can be higher and the long-term stability of the film can be bettered since barium sulfate is stable to alkali and acid.

The mean particle size of the filler is preferably within a range of from 0.1 to 5 $\mu$m, more preferably within a range of from 0.1 to 2 $\mu$m.

Preferably, the amount of the filler to be added is so controlled that the filler addition may not have any influence on the surface condition and the mechanical properties of the film. This is because the film of the present invention has high light reflectivity by itself even though no filler is added thereto. The filler may be added to the resin composition comprising the polyolefin component (A) and the biodegradable polyester component (B) during the process of preparing the composition.

For further increasing the light reflectivity of the reflective film of the present invention, an auxiliary coating layer for light reflective thereon may be formed on the surface of the film.

In producing the reflective film of the present invention, the method for mixing the polyolefin component (A), the biodegradable polyester component (B) and the carbodiimide compound is not specifically limited. As a general method for it, for example, chips of the polyolefin component (A), the biodegradable polyester component (B) and the carbodiimide compound each in a predetermined amount are mixed in a ribbon blender, a tumbler mixer, a Henschel mixer (trade name) or the like, then kneaded in a Banbury mixer or a single-screw or twin-screw extruder, for example at a temperature of from 150 to 300°C, and extruded out through a T-die having a die temperature of from 150 to 300°C to give a filmy resin composition.

The method of stretching the filmy resin composition is not also specifically limited. For example, a biaxial stretching method is employable, which includes a method of stretching the film in the machine direction with rolls followed by further stretching it in the cross direction (transverse direction) with a tenter; and a simultaneous biaxial-stretching method with a tenter. The stretching operation is preferably as follows: In the filmy resin composition, for example, when polypropylene is used as the polyolefin and polylactic acid is used as the biodegradable polyester component (B), the filmy resin composition is preheated at a temperature near the glass transition point of the resin composition, and is stretched while kept warmed as such or further heated. The temperature range for the preheating, warming and addition heating may be from 60 to 120°C or so, preferably from 90 to 110°C, more preferably from 95 to 105°C.

The draw ratio in stretching may be from 1.5 to 5 times or so both in the machine direction and in the cross direction, preferably from 1.8 to 3 times. The draw ratio in stretching may differ between the machine direction and the cross direction. After stretched, the film may be cooled to control the shrink stress thereof.

The thickness of the reflective film of the present invention may be controlled to a desired thickness by controlling the thickness of the filmy resin composition in consideration of the draw ratio in stretching it. The reflective film of the present invention may be controlled to have a thickness of from 30 to 200 $\mu$m.

In the manner as above, the present invention provides a reflective film having a high reflectivity. Though comprising resin components alone, the film of the present invention has excellent light reflectivity and excellent strength and physical properties. Further, the reflective film of the present invention is, either singly as it is or as combined with any other film or support by lamination or complexation, usable as a reflective sheet to form a backlight unit of liquid-crystal display devices, or a reflective sheet for lighting appliances, signboards for illumination, etc. The reflective film of the present invention has excellent mechanical and physical properties, and is therefore worked and handled with ease, and the reflective film of the present invention may be used as a reflective sheet by itself.

Examples

The invention is described concretely with reference to Examples given below; however, the present invention should not be limited to the following Examples.

The light reflectivity of the obtained reflective films was evaluated by measuring the mirror glossiness of the films according to JIS Z-8741. The weather (light) resistance of the films was evaluated by measuring the strength of the films before and after the weather (light )resistance test followed by computing the strength retentiveness from the found data.

(1) Mirror Glossiness (reflectivity):

Using Nippon Denshoku's Handy Glossimeter "PG-1M", the film is analyzed for the 60-degree mirror glossiness at random 5 points of the surface thereof; and the mean value of the found data is the glossiness of the film (unit: %).

(2) Measurement of Tensile Strength:

According to JIS K-7127 "Tensile Test Method for Plastic Film and Sheet", the film is tested at a test speed of 5 mm/min, and the tensile strength of the film is measured (unit: MPa).

(3) Light resistance Test:

Using Suga Test Instruments' weather (light) resistance tester "Super Weather-O-Meter SC750-WN", the film is exposed to xenon light under the condition mentioned below.

B.P.T. (black panel temperature): 63°C.
Humidity: 50 %.
Illuminance: 150 W/m$^2$.
Exposure Time: 500 hours.

The tensile strength at break of the film before and after exposure to light is measured, and the strength retentiveness is computed according to the following formula. This indicates the light resistance of the film.

$$\text{Strength Retentiveness (\%)} = \frac{\text{(tensile strength at break after exposure to light for 500 hours)}}{\text{(tensile strength at break before exposure to light)}} \times 100.$$

Strength retentiveness, 80 % or more:

Light resistance A

Strength retentiveness, from 50 % to less than 80 %:

Light resistance B

Strength retentiveness, less than 50 %:

light resistance C

Example 1:

As a polyolefin component (A), 80 parts by mass of isotactic ethylene-propylene copolymer pellets (molecular weight distribution: 2.8, MFR: 7.0 g/10 min, Japan Polypropylene Corporation's "WINTEC® WFX4"), and 20 parts by mass of acrylic acid-modified polypropylene (Crompton's "Polybond 1002"); as a biodegradable polyester component (B), 90 parts by mass of polylactic acid pellets (MITSUI CHEMICALS' LaceaS H-400", L-form 98 % by mass or more); and as a polycarbodiimide compound, 4 parts by mass of aliphatic polycarbodiimide (Nisshinbo's "Carbodilite® LA-1") were mixed in a Henschel mixer (trade name), and extruded out through a twin-screw extruder at 210°C to give resin composition pellets. Using an extruder, the obtained resin composition pellets were extruded out through a T-die at 200°C to give a filmy resin composition having a thickness of 200 $\mu$m.
The obtained filmy resin composition was preheated at 100°C, then stretched by 3 times in the flow direction (machine direction) at the same temperature, using heated rolls, and thereafter stretched by 3 times in the cross direction (transverse direction) to give a high-reflectivity film having a thickness of 100 $\mu$m. The obtained high-reflectivity film was tested for the mirror glossiness, the tensile strength and the light resistance thereof, and the results are shown in Table 1.

Example 2:

In the same manner as in Example 1 except that the amount of the polylactic acid pellets was changed to 96 parts by mass, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 3:

In the same manner as in Example 1 except that the amount of the polylactic acid pellets was changed to 110 parts by mass, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 4:

In the same manner as in Example 2 except that the amount of the isotactic ethylene-propylene copolymer pellets was changed to 60 parts by mass and that of the acrylic acid-modified polypropylene to 40 parts by mass, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 5:

In the same manner as in Example 2 except that the amount of the polycarbodiimide compound was changed to 2 parts by mass, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 6:

In the same manner as in Example 2 except that 20 parts by mass of the acrylic acid-modified polypropylene was changed to 20 parts by mass of maleic anhydride-modified polypropylene (Crompton's "Polybond 3200"), a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 7:

In the same manner as in Example 2 except that the amount of the isotactic ethylene-propylene copolymer pellets (molecular weight distribution: 2.8, MFR: 7.0 g/10 min, Japan Polypropylene Corporation's "WINTEC® WFX4") was changed to 60 parts by mass, and 20 parts by mass of the acrylic acid-modified polypropylene was changed to 40 parts by mass of maleic anhydride-modified polypropylene, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 8:

In the same manner as in Example 2 except that the polycarbodiimide compound was not used, a filmy resin composition was obtained, and the filmy resin composition was stretched to give a high-reflectivity film. The obtained high- reflectivity film was tested for the mirror glossiness, the tensile strength and the light resistance thereof, and the results are shown in Table 1.

Example 9:

In the same manner as in Example 2 except that propylene-ethylene random copolymer pellets having a molecular weight distribution of 3.7 (MFR: 9.0 g/10 min, Japan Polypropylene Corporation's "NOVATEC® F409ET") was used, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Example 10:

In the same manner as in Example 2 except that propylene homopolymer pellets having a molecular weight distribution of 5.5 (MFR: 2.5 g/10 min, Japan Polypropylene Corporation's "NOVATEC® F203T") was used, a filmy resin composition was obtained, and the filmy resin composition was stretched to give a high-reflectivity film. The obtained high-reflectivity film was tested for the mirror glossiness, the tensile strength and the light resistance thereof, and the results are shown in Table 1.

Comparative Example 1:

In the same manner as in Example 5 except that 20 parts by mass of the acrylic acid-modified polypropylene was changed to 20 parts by mass of epoxy-modified polyethylene (Sumitomo Chemical's "Bondfast® 7B"), a filmy resin composition was obtained, and the filmy resin composition was stretched to give a film. The obtained film was tested for the mirror glossiness, the tensile strength and the light resistance thereof, and the results are shown in Table 1.

Comparative Example 2:

In the same manner as in Example 2 except that 20 parts by mass of the acrylic acid-modified polypropylene was changed to 20 parts by mass of acrylic acid-modified polyethylene (Sumitomo Chemical's "Acryft® WD301"), a filmy resin composition was obtained, and the filmy resin composition was stretched to give a film. The obtained film was tested for the mirror glossiness, the tensile strength and the light resistance thereof, and the results are shown in Table 1.

Comparative Example 3:

In the same manner as in Example 2 except that the polyolefin component (A) was 100 parts by mass of the isotactic ethylene-propylene copolymer pellets (molecular weight distribution: 2.8, MFR: 7.0 g/10 min, Japan Polypropylene Corporation's "WINTEC® WFX4") alone, a filmy resin composition was obtained, and the filmy resin composition was stretched to give a film. The obtained film was tested for the mirror glossiness, the tensile strength and the light resistance thereof, and the results are shown in Table 1.

Comparative Example 4:

In the same manner as in Comparative Example 3 except that the polycarbodiimide compound was not used, a filmy resin composition was obtained, and the filmy resin composition was stretched to give a film. The obtained film was tested for the mirror glossiness, the tensile strength and the light resistance thereof, and the results are shown in Table 1.

Comparative Example 5:

"Toyopearl"®-SS filmP4256 (manufactured by Toyobo co., LTD., thickness 50 μm) was tested for the mirror glossiness and the tensile strength thereof. As a result, the mirror glossiness was 30 %, and the tensile strength was 49 MPa.
In this, "Toyopearl"®-SS is a polypropylene-based biaxially-stretched film having fine voids inside it and having a pearly gloss; and this was originally developed by Toyobo co., LTD., and is known as a pearly film.

[Table 1]

Table 1

| | Example | | | | | | | | | | Comparative Example | | | |
|---|---|---|---|---|---|---|---|---|---|---|---|---|---|---|
| | 1 | 2 | 3 | 4 | 5 | 6 | 7 | 8 | 9 | 10 | 1 | 2 | 3 | 4 |
| Polyolefin Component (A) <mas.pts.> | | | | | | | | | | | | | | |
|   Polyolefin | 80 | 80 | 80 | 60 | 80 | 80 | 60 | 80 | 80 | 80 | 80 | 80 | 100 | 100 |
|   Modified Polyolefin | | | | | | | | | | | | | | |
|     Acrylic acid-modified polypropylene | 20 | 20 | 20 | 40 | 20 | — | — | 20 | 20 | 20 | — | — | — | — |
|     Maleic acid-modified polypropylene | — | — | — | — | — | 20 | 40 | — | — | — | — | — | — | — |
|     Epoxy-modified polyethylene | — | — | — | — | — | — | — | — | — | — | 20 | — | — | — |
|     Acrylic acid-modified polyethylene | — | — | — | — | — | — | — | — | — | — | — | 20 | — | — |
| Biodegradable Polyester Component (B) <mas.pts.> | 90 | 96 | 110 | 96 | 96 | 96 | 96 | 96 | 96 | 96 | 96 | 96 | 96 | 96 |
| Polycarbodiimide Compound <mas.pts.> | 4 | 4 | 4 | 4 | 2 | 4 | 4 | — | 4 | 4 | 2 | 4 | 4 | — |
| Glossiness (%) | 83 | 92 | 52 | 54 | 62 | 73 | 77 | 40 | 48 | 45 | 15 | 15 | 26 | 23 |
| Tensile Strength (MPa) | 60 | 61 | 59 | 60 | 58 | 59 | 59 | 60 | 62 | 65 | 58 | 59 | 52 | 45 |
| Light resistance Test | B | B | B | B | B | A | A | — | B | B | — | B | B | B |

As is evident from Table 1, it is known that when the resin composition is such that the amount of the biodegradable polyester component (B) falls within a range of from 40 to 240 parts by mass relative to 100 parts by mass of the polyolefin component (A), then the glossiness of the obtained film can be at least 40, and even though a filler is not mixed in the composition, the light reflectivity of the film is extremely excellent. In addition, it is known that the film containing an aliphatic polycarbodiimide compound is excellent in the light resistance, and above all, the film containing maleic acid-modified polypropylene is especially excellent in the light resistance.

Industrial Applicability

The invention provides a polyolefin/polyester-based reflective film having a high reflectivity and a reflective sheet for backlight comprising the reflective film, wherein the reflective film is formed from a resin composition containing a polyolefin component and a polyester component and wherein the reflective film requires neither addition of a filler to the starting resin composition nor provision of a reflective coating layer on the surface of the film for the purpose of imparting optical properties such as reflectivity to the film.

**Claims**

1. A reflective film produced by forming a resin composition that contains 100 parts by mass of a polyolefin component (A) comprising a polyolefin and a modified polypropylene and from 40 to 240 parts by mass of a biodegradable polyester component (B), into a film followed by stretching it.

2. The reflective film as claimed in claim 1, wherein the polyolefin is a propylene homopolymer or a copolymer of propylene with ethylene or an olefin having from 4 to 20 carbon atoms.

3. The reflective film as claimed in claim 1, wherein the polyolefin has a molecular weight distribution, as represented by weight-average molecular weight (Mw)/number-average molecular weight (Mn), of from 1.5 to 5.5.

4. The reflective film as claimed in any one of claims 1 to 3, wherein the modified polypropylene is a modified polypropylene containing at least one selected from an acrylic acid-modified polypropylene, a methacrylic acid-modified polypropylene and a maleic acid-modified polypropylene.

5. The reflective film as claimed in claim 1, wherein the biodegradable polyester component (B) is a polylactic acid containing any one optical isomer of D-form or L-form thereof in an amount of at least 95 % by mass.

6. The reflective film as claimed in any one of claims 1 to 3, wherein the resin composition further contains a polycarbodiimide compound in an amount of from 0.1 to 5 parts by mass relative to 100 parts by mass of the total of the polyolefin component (A) and the biodegradable polyester component (B).

7. A reflective sheet for backlight, comprising a reflective film of any one of claims 1 to 6.

## INTERNATIONAL SEARCH REPORT

| | International application No. |
|---|---|
| | PCT/JP2008/054899 |

**A. CLASSIFICATION OF SUBJECT MATTER**
*G02B5/08*(2006.01)i, *C08L23/00*(2006.01)i, *C08L67/00*(2006.01)i, *C08L79/00* (2006.01)i

According to International Patent Classification (IPC) or to both national classification and IPC

**B. FIELDS SEARCHED**

Minimum documentation searched (classification system followed by classification symbols)
G02B5/08, C08L23/00, C08L67/00, C08L79/00

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2005/097840 A1 (Mitsui Chemicals, Inc.), 20 October, 2005 (20.10.05), Full text (particularly, Claims 1, 4, 6, 7, 10, 11; Par. Nos. [0115], [0182]) & JP 2005-307157 A & US 2007/0173603 A1 & EP 1728803 A1 & KR 10-2007-0008608 A & CN 1938339 A | 1-7 |
| X | WO 2005/078017 A1 (Mitsui Chemicals, Inc.), 25 August, 2005 (25.08.05), | 1-5,7 |
| Y | Full text (particularly, Claims 1, 2, 7; the passage in example 17) & US 2007/0160861 A1 & EP 1719803 A1 & CN 1922269 A | 6 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May, 2008 (26.05.08) | 10 June, 2008 (10.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## INTERNATIONAL SEARCH REPORT

| | International application No. |
|---|---|
| | PCT/JP2008/054899 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2006-321988 A  (Toray Industries, Inc.),<br>30 November, 2006 (30.11.06),<br>Full text (particularly, Par. Nos. [0041] to [0043])<br>(Family: none) | 6<br>1-5,7 |
| Y<br>A | JP 2006-241445 A  (Mitsui Chemicals, Inc.),<br>14 September, 2006 (14.09.06),<br>Full text (particularly, Par. Nos. [0049] to [0065])<br>(Family: none) | 6<br>1-5,7 |
| P,A | JP 2007-308638 A  (Chukoh Chemical Industries, Ltd.),<br>29 November, 2007 (29.11.07),<br>Full text<br>(Family: none) | 1-7 |
| A | JP 2006-77063 A  (Kaneka Corp.),<br>23 March, 2006 (23.03.06),<br>Full text<br>(Family: none) | 1-7 |
| P,A | JP 2007-277444 A  (Sumitomo Chemical Co., Ltd.),<br>25 October, 2007 (25.10.07),<br>Full text<br>(Family: none) | 1-7 |
| P,A | WO 2007/074790 A1  (Nisshinbo Industries, Inc.),<br>05 July, 2007 (05.07.07),<br>Full text<br>(Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11174213 A
- JP 2004104077 PCT
- JP 2002146071 A
- US P2941956 A
- JP 47033279 B

**Non-patent literature cited in the description**

- *J. Org. Chem.,* 1963, vol. 28, 2069-2075
- *Chemical Review,* 1981, vol. 81 (4), 619-621